Europäisches Patentamt

European Patent Office

Office européen des brevets

(11) Publication number: **0 085 471**
**B1**

(12) **EUROPEAN PATENT SPECIFICATION**

(45) Date of publication of patent specification: **15.10.86**

(51) Int. Cl.⁴: **C 08 L 101/00, C 08 J 3/06**

(21) Application number: **83300001.1**

(22) Date of filing: **04.01.83**

(54) Aqueous emulsions of hydrocarbon resins and process for preparing the same.

(30) Priority: **15.01.82 US 339647**
**15.01.82 US 339648**

(43) Date of publication of application:
**10.08.83 Bulletin 83/32**

(45) Publication of the grant of the patent:
**15.10.86 Bulletin 86/42**

(84) Designated Contracting States:
**BE DE FR GB IT NL SE**

(56) References cited:
**GB-A- 932 075**
**GB-A- 964 126**
**US-A-3 404 108**

**CHEMICAL ABSTRACTS, vol. 96, no. 2, 11th January 1982, page 58, no. 7821j, Columbus, Ohio, US**

(73) Proprietor: **Exxon Research and Engineering Company**
**P.O.Box 390 180 Park Avenue**
**Florham Park New Jersey 07932 (US)**

(72) Inventor: **Jagisch, Frank Carl**
**3821 Lake LaRouge Drive**
**Baton Rouge Louisiana (US)**
Inventor: **Evans, Morris Lee**
**723 Shadyglen Drive**
**Baton Rouge Louisiana (US)**

(74) Representative: **Bawden, Peter Charles et al**
**ESSO CHEMICAL LIMITED Esso Chemical Research Centre PO Box 1**
**Abingdon Oxfordshire OX13 6BB (GB)**

Courier Press, Leamington Spa, England.

## Description

This invention relates to emulsions of hydrocarbon resins and more particularly to aqueous emulsions of resins prepared from steam cracked petroleum fractions.

Many synthetic resins which may be formed by emulsion polymerization are well known in the art. It is not difficult to form stable aqueous dispersions of such resins by addition of the resin feed, an appropriate dispersing agent and catalyst to water with stirring. However, emulsification of resins produced by other polymerization techniques requires that the bulk polymer must be dispersed in water to obtain an aqueous dispersion. Such a type is hydrocarbon resin produced from steam-cracked petroleum fractions.

These hydrocarbon resins, i.e. petroleum resins, are defined herein as the thermoplastic resins obtained by polymerization, thermally or more frequently in the presence of a catalyst of the Friedel-Crafts type, of steam cracked petroleum distillates, boiling in the range between about 30°C and 280°C., or any fraction of these distillates boiling within the said range, or of mixtures of olefins and diolefins containing sufficient diolefins to obtain a resin and not an oil. This polymerization is performed at temperatures which range generally from 0 to 120°C., usually from 0 to 70°C., and preferably from 30°C to 55°C.

These resins are polydienic in character and can have a ring and ball softening point between about 38°C and 180°C and the techniques of the present invention may be applied to any such resin although they are particularly useful with the resins of higher softening points which are the more difficult to emulsify.

Since these resins are solid at room temperature, numerous approaches have been utilized to produce aqueous emulsions of said resins for application as an adhesive, as a saturant or coating for papr or cloth or as a sizing or binding material in paper pulp.

One approach was to solvate the resin in hydrocarbon solvent and then combine resin solution and water. Invariably some residual hydrocarbon solvent remains in the finished emulsion, and this is undesirable in certain applications. This has led to the development of solvent-free dispersions (see U.S. Patent 2,809,948) and emulsions (see U.S. Patent 3,377,298 and United Kingdom Patent 932075) of petroleum resins. In both of these formulations, ionic emulsifiers have been utilised; in the former a mixture of cationic and non-ionic surface active agents is used to achieve a resin dispersion; and, in the latter an ionic surfactant is used in combination with an aquoeus gel of a swelling earth to produce an emulsion paste of a petroleum resin. In the United States Patent 3,404,108 petroleum resins are emulsified using certain cationic, anionic, and non-ionic emulsifiers to yield materials for pavement coating.

Petroleum resin emulsions containing substantial amounts of plasticisers or diluents such as linseed oil and waxes and paraffin are taught in French Patent 1,452,875 and Germain Offen. 2014652 respectively. However, such large percentages of diluent can materially modify, not always favourably, the properties of the base resin.

The resin emulsions of the present invention are particularly useful as tackifying components where they enhance the adhesive properties of an emulsion polymer system such as a natural or synthetic rubber used as an adhesive. It is highly desirable that raw materials added to the tackifier resin emulsion for primarily other than tack or adhesion enhancement, e.g. plasticisers or other diluents, emulsifiers, stabilizers, etc., be kept to an absolute minimum. Such materials often have an adverse effect on the functional properties, e.g. tack, adhesive properties, of the resin being emulsified.

For a general discussion of resin emulsions for emulsion pressure sensitive adhesive use (including its commercial aspects) see the published talk entitled Resin Dispersions for Water Based Pressure Sensitive Adhesives by Robert W. Wherry and presented at the The Pressure Sensitive Tape Council Seminar on Water Based PSA Systems in June of 1979.

This invention has for one of its objects the preparation of highly functional, relatively high softening point, non-polar petroleum resin emulsions without the use of volatile solvents and employing minimal plasticizers, diluents or other products constructive in emulsification but potentially deleterious to the emulsion end use.

A further object is to provide an emulsion preparation method of an inversion type for the resins which effectively produces emulsions of small particle size and exceptional stability.

A further object is provision of aqueous dispersions of hydrocarbon resins of high shelf life and mechanical stability.

A further object is to provide petroleum resins in the form of a latex-like dispersion for application as a pressure sensitive adhesive which may be used as a tackifier in emulsion based adhesives such as those containing emulsions of natural and synthetic rubbers. The resin emulsions may also be used as a saturant or coating for paper or cloth, or as a sizing or binding material in paper pulp.

It has been discovered that an aqueous emulsion of a petroleum resin may be obtained when said resin is melt blended with an oil and an emulsifier and thereafter admixed with about 50 weight parts of water. The aqueous resin emulsion was made possible by initially slowly adding and dispersing with vigorous agitation boiling water in said melted blend of resin, naphthenic oil and emulsifier over a prescribed critical time length prior to inversion of the dispersion of water.

Thus in accordance with the objects of this invention there is provided an aqueous emulsion of a petroleum resin having from 30 to 75 weight% water and 70 to 25 weight% of a mixture comprising from 3 to 10 parts by weight of an emulsifier which is a nonionic polyoxyethylene alkyl aryl ether, anionic alkylaryl sulphonate or mixture thereof 3 to 10 parts by weight of a resinplast and from 80 to 94 parts by weight of said hydrocarbon resin.

A blend suitable for providing a resin in water aqueous emulsion of petroleum resin prepared by polymerisation of steam cracked petroleum distillates boiling in the range 30°C to 280°C by an inversion process comprises from 3 to 10 parts by weight of an emulsifier which is a nonionic polyoxyethylene alkyl aryl ether, anionic alkyl aryl sulphonate or mixture thereof 3 to 10 parts by weight of resinplast and 80 to 94 parts by weight of said hydrocarbon resin.

The invention also provides a method for the production of a petroleum resin in water emulsion comprising the sequential steps of admixing from 3 to 10 parts by weight of an emulsifier comprising a nonionic polyoxyethylene alkyl aryl ether, anionic alkyl aryl sulfonate or mixtures thereof with from 80 to 97 parts by weight of a molten hydrocarbon resin prepared by polymerisation of steam cracked petroleum distillates boiling in the range 30°C to 280°C and from 0 to 10 parts by weight of a resinplast, slowly adding water heated to about 100°C to said admixture whilst at a temperature above the softening point of the resin, emulsifier, resinplast mixture with stirring over a period of at least 20 minutes and until inversion occurs, and then adding sufficient additional water with agitation to provide an aqueous emulsion containing from 30 to 75 weight% water and thereafter cooling to a temperature at least about 20°C below the softening point of the mixture of emulsifier, resin and resinplast prior to terminating agitation.

As noted above, the hydrocarbon resins emulsified according to this invention are petroleum resins prepared by homo and copolymerisation of olefins, diolefins and aromatic components, predominantly C-5 and C-9 species, from distillates of cracked petroleum stocks. A Friedel-Crafts catalyst is typically employed. The resulting resin has an aliphatic, aromatic or mixed aliphatic/aromatic character, generally with a minimum ring and ball softening point of 30°C. Although the methods described herein can be used to emulsify lower softening point resins, it is the higher softening point resins which are more difficult to emulsify and are thus especially addressed here.

Broadly, the hydrocarbon resins are polymerized from petroleum cracked distillates boiling in the range of about 30°C to 280°C or any fraction boiling within this range. The resins are prepared by thermal polymerization or, more usually, by treating the distillates with 0.25—2.5% of a Friedel-Crafts type catalyst such as aluminium chloride, aluminum bromide, boron trifluoride, and the like or solutions, slurries, or complexes thereof. The reactions are conducted at temperatures in the range of 0 to 120°C, preferably 0 to 70°C, and more preferably 30° to 55°C. Residual catalyst is quenched by suitable methods such as addition of methyl alcohol and subsequent filtration, water and/or caustic washing. The final solution is then stripped of unreacted hydrocarbons and low molecular weight oils by vacuum or steam distillation.

In place of the petroleum cracked distillates, the feed to polymerization may consist of mixtures of a diolefin with an olefin. Sufficient diolefin must be present and incorporated in the polymer to give a resin having a suitably high melting point instead of an oil.

For most resins a resinplast is admixed therewith in combination with the resin in amounts ranging up to 10% by weight (based on total weight excluding water), preferably in amounts ranging from 3 to 10 percent by weight. Preferably and especially with resins having a softening point above 85°C., the resinplast adjust the ball and ring softening point of the admixture to within 75°C to 90°C. The 95°C melt viscosity may range from 20,000 to 60,000 centipoises. The resinplast includes a wide variety of materials including petroleum oils of the paraffinic, naphthenic and aromatic types, petroleum waxes, petrolatum, low molecular weight polyolefins such as low molecular weight, largely amorphous polyethylenes and similar materials. The resinplast must be compatible with the resin. By reducing the softening point and the melt viscosity of the resin, the resinplast promotes distribution of the water in the molten resin by making the resin softer and less cohesive, and thus more amenable to water addition and formation of small water droplets. Finally, the resinplast acts as a compatibilizer, making the resin more receptive to the emulsifier. An example of a preferred resinplast is naphthenic oils having a viscosity range of from 500 to 2000 SSU (at 100°F).

The emulsifiers which have been found useful for producing the emulsions of the invention are a combination of a nonionic emulsifier with an anionic emulsifier. The nonionic emulsifier, for example, can be an ethoxylated alkyl phenol in which the alkyl group contains from 8 to 12, preferably about 9 carbon atoms. The molar ratio of ethylene oxide to alkyphenol is selected based on the chemistry of the particular resin. Useful ratios include 8 to 14, preferably 10 to 12 moles of ethylene oxide per mole of alkyl phenol. Suitable anionic emulsifiers are the alkyl aryl sulphonates which are generally the alkali metal salts to make them water soluble. Highly useful for the practice of this invention is the sodium or calcium salt of dodecylbenzene sulfonic acid. In total amount as already indicated, the emulsifier ranges in weight from 3% to 10%, preferably 4% to 6%, by weight.

Thus, in summary the non-water portion of the emulsion will have a concentration range of: resin ranging from 80% to 94% by weight; emulsifier ranging from 3% to 10%; resinplast ranging from 3 to 10%. The water content of the finished emulsion will range from 30 to 75 weight%.

Any non-reactive additives may be used in the emulsion of this invention, for example, pigments, dyes and labeling agents.

This invention also contemplates a method for the production of a hydrocarbon solid in water emulsion comprising the sequential steps of admixing, preferably by shearing agitation, from 3 to 10 parts by weight of an emulsifier consisting of a nonionic polyoxyethylene alkyl aryl ether, anionic alkyl aryl

3

## 0 085 471

sulfonate or mixtures thereof, with from 80 to 97 parts by weight of a molten hydrocarbon, preferably petroleum, resin and from 0 to 10 parts by weight of a resinplast, heating said admixture to above the softening point of the resin emulsifier, resinplast mixture, slowly adding water heated to about 100°C to said heated admixture with vigorous, high shear agitation over a time period, the length of which is critical, until inversion occurs, adding sufficient additional water with agitation to provide an aqueous emulsion containing from 30 to 75 weight% water and thereafter cooling to a temperature less than about 20°C below the softening point of the mixture of emulsifier, resin and resinplast prior to terminating agitation. Finished emulsion is then typically strained using cheese cloth or a commercial filter bag or filter pack.

As is indicated above, the water is dispersed in the resin admixture to form a water in oil emulsion using vigorous shearing agitation. The impeller design should maximize the portion of the mixing energy dissipation into the emulsion which is classified as shear. Various turbine impellers such as flat blade and disk type flat blade turbines and high shear proprietary design impellers such as the Fawcett mixed flow impeller are suitable.

In the mixing procedure which has been detailed above, there appear to be certain critical aspects to this procedure which are hereinafter indicated. The mixing procedure involves, as indicated, the heating of the resin to a molten state and blending with the resinplast if used. Thereafter the emulsifier is added to the molten resin. This molten mix must be blended thoroughly to assure homogeneity. During this blending the admixture temperature is increased somewhat after which water at approximately 100°C is metered into the admixture. Water addition can tend to reduce the temperature of the mixture. It is imperative that the temperature remain above the softening point of the resin-resinplast-emulsifier softening point, typically a minimum of 5°C to 10°C above, at all times prior to inversion. Further, high shear conditions should be used for the mixing, for example impeller rotational speed should be high (e.g. 550—700 rpm in a one liter laboratory unit) to ensure that the molten resin surface is continuously agitated and folded into the mix. During this time a water in oil emulsion is being obtained.

When approximately 1/3 of the water addition is complete, it is highly desirable to terminate water addition for from 5 to 10 minutes while continuing vigorous agitation. It is essential that the critical time interval from first water addition to inversion be governed by short lapses in water addition in this manner. Such lapses are also useful to maintain mix temperatures, the importance of which is emphasized in the paragraph above.

Mention has been made of the criticality of the time interval from first water addition to the point of emulsion inversion from water in oil to oil in water. Data indicate that for a given resin there is a mix time minimum, below which final resin emulsion particle size will be undesirably large. This critical mix time is dependent upon the power input to the mixture per unit volume of emulsion. Power input is directly related to impeller diameter and impeller rotational speed. This critical time interval can range from approximately 20 to 30 minutes in a small laboratory batch prepared employing the aforementioned very high impeller speeds to 2 plus hours in larger, plant units. It is within the skill of the art to determine the critical time and agitation requirement here for particular cases.

Following inversion it is desirable to reduce the vigorous nature of the stirring to a slow stirring to minimize foam and to terminate batch heating. Water should now be added to the emulsion mix at a temperature materially reduced below boiling and continued until the desired solids level is obtained. The stirring is continued for from 5 to 10 minutes after completion of the water addition. Prior to terminating the stirring, the emulsion temperature must be reduced to a temperature of at least 20°C below the resin-resinplast-emulsifier softening point in order to prevent particle size growth or skin development in the emulsion system.

The aforementioned critical steps are vital to achieve excellent low particle size and the exceptional, unique stability exhibited by these hydrocarbon resin emulsions.

Thus one may also produce an aqueous emulsion of a blend of a hydrocarbon resin having a ring and ball softening point of at least 90°C, preferably 95°C to 125°C and a hydrocarbon resin having a softening point less than 80°C, said emulsion comprising from 3 to 10 parts by weight of an emulsifier of the class defined above, from 90 to 97 parts by weight of said blead of hydrocarbon resins and the balance water.

The emulsions of the present invention are useful as tackifiers in emulsion adhesive systems which generally contain emulsions of natural or synthetic rubber. Examples of synthetic rubber emulsions that are used are styrene butadiene rubber latexes which may or may not be carboxylated. Other suitable rubber emulsions are natural rubber emulsions such as neoprene emulsions.

These adhesive formulations may be used for the production of labels, pressure sensitive adhesive tapes, contact adhesives and adhesives for use in the building industry and floor coverings.

The example set forth below illustrates several embodiments of the invention and are not to be construed as limiting in any manner.

Example 1

85 parts by weight of a non-polar, 93°C softening point petroleum resin, Escorez 2101 sold by Exxon Chemical Americas, Houston, Texas is heated to a temperature of about 115°C and admixed with 10 weight parts of naphthenic oil and 5 weight parts of Atlox 3404 F emulsifier sold by ICI Americas Inc. The Atlox 3404 F is reported to be a blend of polyoxyethylene alkyl aryl ether and alkyl aryl sulfonate. The molten resin is blended with the naphthenic oil, then the emulsifier is stirred into the resin-resinplast blend until a complete and thorough blend of all three ingredients is achieved. The resin-resinplast-emulsifier admixed blend is heated at approximately 120°C at which time the first third of water is metered in at a temperature of approximately 100°C. Actual water addition will exceed 1/3 to make up for water evaporation. The metering in continues with fast blending speed, i.e. 550—700 rpm, so as to make certain that the resin admixture is continuously agitated and that the water is folded into the mix. The temperature during this initial metering is kept at about 88—93°C in order to maintain a viscosity at appropriate levels to facilitate the mixing. When approximately 1/3 of the water has been added, the system is mixed vigorously for 5 to 10 minutes after which the hot water addition is resumed while maintaining the temperature of the system at about 88—93°C. Several additional, spaced water additions are utilized to prolong mixing and control batch temperature. Hot water addition continues until inversion occurs at which time the supply of heat to the system is terminated. The balance of the water is added at ambient temperature and the stirrer speed is reduced to minimize foam. Water addition continues with low stirring and upon its completion stirring continues from 5 to 10 minutes. Prior to terminating agitation it is necessary to cool the mixture to approximately 20°C below the ring and ball softening point of the mixture of resin-resinplast-emulsifier or to about 60°C. Upon terminating agitation the resin emulsion is passed through a cheese cloth so as to remove any large flakes or dried particles. In a laboratory mix typical times are as follows: resin melting and blending of resinplast and emulsifier—30 to 45 minutes, water addition to the inversion point—20 to 45 minutes, final dilution and cooling—about 15 minutes.

The resulting emulsion is slightly off-white in color, smooth not gritty to the touch, dries to a very fine powder on the finger tips and will not separate even after months of shelf storage (unagitated). Particle sizes averaging 0.5 micron have been achieved which makes such emulsions excellent components for emulsion adhesives.

Example 2

90 parts by weight of a non-polar, 94°C softening point petroleum resin, Escorez 1310 sold by Exxon Chemical Americas, Houston Texas, is heated to a temperature of about 115°C and admixed with 5 weight parts of naphthenic oil and 5 weight parts of Atlox 3404 F emulsifier sold by ICI Americas, Inc. Emulsion preparation procedures follow the same course as in Example 1. The resulting emulsion is white in color but otherwise similar to that in Example 1 in appearance, feel and properties. This emulsion, too, is an excellent component for use in water based adhesives.

As is apparent from the foregoing description, the emulsion preparation procedure has the advantage that it does not require either reduction or increase in pressure to achieve the emulsion, i.e. the emulsion can be carried out at normal atmospheric pressure.

Example 3

Hydrocarbon resin prepared from feed having a boiling range between about 30°C and 200°C and having a ring and ball softening point of about 60°C is blended with a hydrocarbon resin prepared with feed having a boiling range between about 100°C and 280°C and having a softening point of 115°C, in a 70/30 ratio. The emulsifier used in the emulsification of this resin blend was an ethoxylated nonylphenol having 12 moles of ethylene oxide per mole of nonylphenol. This blend of resin was emulsified according to the procedure given below:

Heat 250 grams of the blend of resins to a molten state in a 500 ml resin flask with a stirrer;

Add 12.5 grams of an emulsifier to the molten resins (approximately at 120°C) and blend thoroughly;

Maintain the resins at about 95°C and begin metering in 100°C water at an addition rate of about 5 ml/min with continuous fast stirring at a speed of 500—600 rpm to ensure the resins surface is continuously agitated and folded into the mix.

Monitor and control the temperature to a minimum of 85°C and preferably between 90 and 95°C;

After inversion, turn off heat and increase the water addition rate; and

After the water addition is complete, the emulsion is stirred 5 more minutes and cooled to about 30°C. The amount of water added can range in amounts to provide a solids content of 25 to 70 percent.

Example 4

50 parts of the resin emulsion produced according to Example 1 was mixed with 100 parts of various commercially available carboxylated styrene/butadiene rubber latices. The mixture was coated onto cellophane or polyester to produce an adhesive tape and the pressure sensitive adhesive properties were determined by the methods developed by the technical committee of the Pressure Sensitive Tape Council (PSTC) and more especially 180°C Peel Adhesion (PSTC-1 method) Tack Rolling Ball Method (PSTC-6), Polyken Tacks and Shear Adhesion (PSTC-7).

The results were as follows:

| Latex | 180° Peel strength (g/cm) | Ball tack (cm) | Polyken tack (g) | Shear (PSTC-7) (hours) |
|---|---|---|---|---|
| Polysar PL 110 | 560 | >25 | 460 | 68 |
| XE 222 | 620 | >25 | 880 | 4.2 |
| XE 378 | 480 | >25 | 370 | 34.5 |
| Amscores 6140 | 380 | >25 | 330 | 32.7 |
| Revinex EL 8101 | 900 | 22 | 420 | 12.3 |
| EL 8102 | 850 | 11 | 640 | 26.0 |
| Bayer KA 8245 | 800 | 3 | 880 | 1.0 |

Example 5

Example 4 was repeated except using the resin emulsion of Example 2 and the adhesive properties were as follows:

| Latex | 180° Peel strength (g/cm) | Ball tack (cm) | Polyken tack (g) | Shear (PSTC-7) (hours) |
|---|---|---|---|---|
| Polysar PL 110 | 300 | >25 | 260 | >200 |
| XE 222 | 380 | >25 | 480 | 15 |
| XE 378 | 255 | >25 | 180 | 62.3 |
| Amscores 6140 | 140 | >25 | 80 | >300 |
| Revinex EL 8101 | 500 | >25 | 660 | 30.7 |
| EL 8102 | 500 | 19 | 490 | 47.2 |
| Bayer KA 8245 | 500 | 6 | 630 | 44.0 |

It will be apparent from the foregoing that, although particular forms of the invention have been illustrated and described, various modifications can be made without departing from the spirit and scope of the invention. Accordingly it is not intended that the invention be limited except by the appended claims.

**Claims**

1. A blend suitable for providing a resin in water aqueous emulsion of petroleum resin prepared by polymerisation of steam cracked petroleum distillates boiling in the range 30°C to 280°C by an inversion process comprising from 3 to 10 parts by weight of an emulsifier which is a nonionic polyoxyethylene alkyl aryl ether, anionic alkyl aryl sulphonate or mixture thereof blended with a mixture of from 3 to 10 parts by weight of resinplast and 80 to 94 parts by weight of said petroleum resin.

2. A blend according to claim 1 wherein said emulsifier is present in from 4 to 6 parts by weight.

3. A blend according to claims 1 or 2 wherein said resinplast is a naphthenic oil.

4. A blend according to any of the preceding claims in which the hydrocarbon resin has a ring and ball softening point of at least 85°C.

5. A blend according to claim 3 wherein said emulsifier is present in about 5 parts by weight, said naphthenic oil is present in about 5 parts by weight and said resin is a petroleum resin having a softening point of from 90°C to 95°C and is present in about 90 parts by weight.

6. A blend according to any of the preceding claims having a ring and ball softening point of from 75° to 90°C and a 95°C melt viscosity ranging from 20,000 to 60,000 centipoises.

7. An aqueous emulsion of a petroleum resin having from 30 to 75 weight% water and 70 to 25 weight% of a mixture comprising from 3 to 10 parts by weight of an emulsifier which is a nonionic polyoxyethylene alkyl aryl ether, anionic alkyl aryl sulphonate or mixture thereof 3 to 10 parts by weight of a resinplast and from 80 to 94 parts by weight of said petroleum resin.

8. An aqueous emulsion of a hydrocarbon resin according to claim 7 in which the resin has a ring and ball softening point of at least 85°C.

9. An aqueous emulsion according to any of the preceding claims in which the emulsifier is a mixture of ethoxylated $C_8$—$C_{12}$ alkyl phenol and the calcium salt of dodecyl benzene sulphonic acid.

10. The use of an aqueous emulsion according to any of claims 7 to 9 as a tackifier in pressure sensitive adhesives and contact adhesives.

11. A method for the production of a petroleum resin in water emulsion comprising the sequential steps of admixing from 3 to 10 parts by weight of an emulsifier comprising a nonionic polyoxyethylene alkyl aryl ether, anionic alkyl aryl sulfonate or mixtures thereof with from 80 to 97 parts by weight of a molten petroleum resin prepared by polymerisation of steam cracked petroleum distillates boiling in the range 30°C to 280°C and from 0 to 10 parts by weight of a resinplast, slowly adding water heated to about 100°C to said admixture whilst at a temperature above the softening point of the resin, emulsifier, resinplast mixture with stirring over a period of at least 20 minutes and until inversion occurs, and then adding sufficient additional water and agitation to provide an aqueous emulsion containing from 30 to 75 weight% water and thereafter cooling to a temperature at least about 20°C below the softening point of the mixture of emulsifier, resin and resinplast prior to terminating agitation.

12. A method according to claim 11 in which the resin has a ring and ball softening point above 85°C.

13. A method according to claim 11 or claim 12 wherein said stirring is vigorous agitation and the temperature of said admixture is at least 5°—10°C above its softening point prior to inversion.

14. A method according to claim 11 in which the hydrocarbon resin is a blend of a hydrocarbon resin having a softening point in the range of about 95° to about 125°C and a hydrocarbon resin having a softening point below about 80°C.

15. A method according to claim 14 in which said first mentioned resin has a softening point of about 125°C.

16. An emulsion adhesive system containing an emulsion of a natural or synthetic rubber and an aqueous emulsion according to any of claims 7 to 9.

**Patentansprüche**

1. Gemisch, welches zur Bereitstellung einer wäßrigen Harz-in-Wasser-Emulsion von durch Polymerisation von dampfgecrackten Erdöldestillaten mit einem Siedebereich von 30 bis 280°C hergestelltem Erdölharz durch ein Inversionsverfahren geeignet ist, enthaltend 3 bis 10 Gew.-Teile eines Emulgiermittels, welches ein nichtionischer Polyoxyethylenalkylarylether, ein anionisches Alkylarylsulfonat oder ein Gemisch daraus ist, gemischt mit einem Gemisch aus 3 bis 10 Gew.-Teilen eines Harzplastifiziermittels und 80 bis 94 Gew.-Teilen des genannten Erdölharzes.

2. Gemisch gemäß Anspruch 1, worin das Emulgiermittel zu 4 bis 6 Gew.-Teilen vorhanden ist.

3. Gemisch gemäß Anspruch 1 oder 2, worin das Harzplastifiziermittel ein naphthenisches Öl ist.

4. Gemisch gemäß einem der vorstehenden Ansprüche, worin das Kohlenwasserstoffharz einen mit Ring und Kugel bestimmten Erweichungspunkt von mindestens 85°C aufweist.

5. Gemisch gemäß Anspruch 3, worin das Emulgiermittel zu etwa 5 Gew.-% vorhanden ist, das naphthenische Öl zu etwa 5 Gew.-% vorhanden ist und das Harz ein Erdölharz mit einem Erweichungspunkt von 90 bis 95°C ist und zu etwa 90 Gew.-Teilen vorhanden ist.

6. Gemisch gemäß einem der vorstehenden Ansprüche mit einem durch Ring und Kugel bestimmten Erweichungspunkt von 75 bis 90°C und einer Schmelzviskosität bei 95°C von 20 000 bis 60 000 Centipoise.

7. Wäßrige Emulsion eines Erdölharzes, enthaltend 30 bis 75 Gew.-% Wasser und 70 bis 25 Gew.-% eines Gemisches aus 3 bis 10 Gew.-Teilen eines Emulgiermittels, welches ein nichtionischer Polyoxyethylenalkylarylether, ein anionisches Alkylarylsulfonat oder ein Gemisch daraus ist, 3 bis 10 Gew.-Teilen eines Harzplastifiziermittels und 80 bis 94 Gew.-Teilen des genannten Erdölharzes.

8. Wäßrige Emulsion eines Kohlenwasserstoffharzes gemäß Anspruch 7, worin das Harz einen mit Ring und Kugel bestimmten Erweichungspunkt von mindestens 85°C aufweist.

9. Wäßrige Emulsion gemäß einem der vorstehenden Ansprüche, worin das Emulgiermittel ein Gemisch aus ethoxyliertem $C_8$- bis $C_{12}$-Alkylphenol und dem Calciumsalz von Dodecylbenzolsulfonsäure ist.

10. Verwendung einer wäßrigen Emulsion gemäß einem der Ansprüche 7 bis 9 als Klebrigmacher in druckempfindlichen Klebstoffen und Kontaktklebern.

11. Verfahren zur Herstellung einer Emulsion von Erdölharz in Wasser, dadurch gekennzeichnet, daß man stufenweise nacheinander zunäschst 3 bis 10 Gew.-Teile eines Emulgiermittels aus einem nichtionischen Polyoxyethylenalkylarylether, einem anionischen Alkylarylsulfonat oder Gemischen daraus mit 80 bis 97 Gew.-Teilen eines durch Polymerisation von dampfgecrackten Erdöldestillaten mit einem Siedebereich von 30 bis 280°C hergestellten, geschmolzenen Erdölharzes und 0 bis 10 Gew.-Teilen eines Harzmodifiziermittels vermischt, dann dieses Gemisch bei einer Temperatur oberhalb des Erweichungs-punktes des Gemisches aus Harz, Emulgiermittel und Harzmodifiziermittel unter Rühren im Verlauf von mindestens 20 Minuten langsam mit auf etwa 100°C erhitztem Wasser versetzt, bis Inversion eintritt, dann unter Rühren genügend weiteres Wasser zusetzt, um eine wäßrige Emulsion mit einem Wassergehalt von 30 bis 75 Gew.-% Wasser zu bilden, und anschließend auf eine mindestens etwa 20°C unterhalb des Erweichungspunktes des Gemisches aus Emulgiermittel, Harz und Harzmodifiziermittel liegende Temperatur abkühlt, bevor das Rühren eingestellt wird.

12. Verfahren gemäß Anspruch 11, worin das Harz einen mit Ring und Kugel bestimmten Erweichungspunkt oberhalb 85°C aufweist.

13. Verfahren gemäß Anspruch 11 oder Anspruch 12, worin der Rühren ein heftiges Rühren ist und die Temperatur des Gemisches vor der Inversion mindestens 5 bis 10°C oberhalb des Erweichungspunktes des Gemisches liegt.

14. Verfahren gemäß Anspruch 11, worin das Kohlenwasserstoffharz ein Gemisch eines Kohlenwasserstoffharzes mit einem Erweichungspunkt im Bereich von etwa 95 bis etwa 125°C und eines Kohlenwasserstoffharzes mit einem Erweichungspunkt unterhalb etwa 80°C ist.

15. Verfahren gemäß Anspruch 14, worin das zuerst genannte Harz einen Erweichungspunkt von etwa 125°C aufweist.

16. Emulsionsklebersystem, enthaltend eine Emulsion eines natürlichen oder synthetischen Kautschuks und eine wäßrige Emulsion gemäß einem der Ansprüche 7 bis 9.

**Revendications**

1. Mélange apte à former une émulsion aqueuse résine-dans-eau d'une résine de pétrole préparée par polymérisation de distillats de pétrole craqués à la vapeur, bouillant dans l'intervalle de 30°C à 280°C, par un procédé d'inversion, comprenant 3 à 10 parties en poids d'un émulsionnant qui est un éther alkylarylique polyoxyéthylénique non ionique, un alkylarylsulfonate anionique ou leurs mélanges, formulé avec un mélange de 3 à 10 parties en poids de résinoplaste et 80 à 94 parties en poids de ladite résine de pétrole.

2. Mélange suivant la revendication 1, dans lequel l'émulsionnant est présent en proportion de 4 à 6 parties en poids.

3. Mélange suivant les revendications 1 ou 2, dans lequel le résinoplaste est une huile naphténique.

4. Mélange suivant l'une quelconque des revendications précédentes, dans lequel la résine hydrocarbonée a un point de ramollissement bille-et-anneau d'au moins 85°C.

5. Mélange suivant la revendication 3, dans lequel l'émulsionnant est présent en une quantité d'environ 5 parties en poids, ladite huile naphténique est présente en une quantité d'environ 5 parties en poids et ladite résine est une résine de pétrole ayant un point de ramollissement d'environ 90 à 95°C et est présente en proportion d'environ 90 parties en poids.

6. Mélange suivant l'une quelconque des revendications précédentes, ayant un point de ramollissement bille-et-anneau de 75 à 90°C et une viscosité à l'état fondu à 95°C de 20 000 à 60 000 centipoises.

7. Emulsion aqueuse d'une résine de pétrole ayant 30 à 75% en poids d'eau et 70 à 25% en poids d'un mélange comprenant 3 à 10 parties en poids d'un émulsionnant qui est un éther alkylarylique polyoxyéthylénique non ionique, un alkylarylsulfonate anionique ou leurs mélanges, 3 à 10 parties en poids d'un résinoplaste et 80 à 94 parties en poids de ladite résine de pétrole.

8. Emulsion aqueuse d'une résine hydrocarbonée suivant la revendication 7, dans laquelle la résine a un point de ramollissement bille-et-anneau d'au moins 85°C.

9. Emulsion aqueuse suivant l'une quelconque des revendications précédentes, dans laquelle l'émulsionnant est un mélange d'alkylphénol éthoxylé à groupe alkyle en $C_8$ à $C_{12}$ et du sel de calcium de l'acide dodécylbenzenesulfonique.

10. L'utilisation d'une émulsion aqueuse suivant l'une quelconque des revendications 7 à 9 comme agent d'adhésivité dans des adhésifs sensibles à la pression et des adhésifs de contact.

11. Procédé de production d'une émulsion de résine de pétrole dans l'eau, comprenant les étapes successives consistant à mélanger 3 à 10 parties en poids d'un émulsionnant comprenant un éther alkylarylique polyoxyéthylénique non ionique, un alkylarylsulfonate anionique ou leurs mélanges, avec 80 à 97 parties en poids d'une résine de pétrole fondue préparée par polymérisation de distillats de pétrole craqués à la vapeur bouillant dans l'intervalle de 30 à 280°C et 0 à 10 parties en poids d'un résinoplaste, à ajouter lentement de l'eau chauffée à environ 100°C audit mélange se trouvant à une température supérieure au point de ramollissement du mélange résine-émulsionnant-résinoplaste en agitant pendant une période d'au moins 20 minutes et jusqu'à ce que l'inversion ait lieu, puis à ajouter suffisamment d'eau en agitant pour obtenir une émulsion aqueuse contenant 30 à 75% en poids d'eau, puis à refroidir à une température inférieure d'au moins 20°C au point de ramollissement du mélange d'émulsionnant, de résine et de résinoplaste avant d'interrompre l'agitation.

12. Procédé suivant la revendication 11, dans lequel la résine a un point de ramollissement bille-et-anneau supérieur à 85°C.

13. Procédé suivant la revendication 11 ou la revendication 12, dans lequel l'agitation est une agitation énergique et la température dudit mélange est supérieure d'au moins 5 à 10°C à son point de ramollissement avant l'inversion.

14. Procédé suivant la revendication 11, dans lequel la résine hydrocarbonée est un mélange d'une résine hydrocarbonée ayant un point de ramollissement dans l'intervalle d'environ 95 à environ 125°C et d'une résine hydrocarbonée ayant un point de ramollissement inférieur à environ 80°C.

15. Procédé suivant la revendication 14, dans lequel la résine mentionnée en premier lieu à un point de ramollissement d'environ 125°C.

16. Composition d'adhésif en émulsion, contenant une émulsion d'un caoutchouc naturel ou synthétique et une émulsion aqueuse suivant l'une quelconque des revendications 7 à 9.